(19) Europäisches Patentamt
European Patent Office
Office européen des brevets

(11) **EP 3 291 433 A1**

(12) **EUROPÄISCHE PATENTANMELDUNG**

(43) Veröffentlichungstag:
**07.03.2018 Patentblatt 2018/10**

(51) Int Cl.:
***H02M 3/335*** *(2006.01)*

(21) Anmeldenummer: **16187429.2**

(22) Anmeldetag: **06.09.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft
80333 München (DE)**

(72) Erfinder:
- **Helsper, Martin
90584 Allersberg (DE)**
- **Hergt, Martin
90411 Nürnberg (DE)**
- **Lutze, Marcel
90459 Nürnberg (DE)**
- **Pfeifer, Markus
90455 Nürnberg (DE)**

# (54) GLEICHSPANNUNGSWANDLER MIT TRANSFORMATOR

(57) Die Erfindung beschreibt einen Gleichspannungswandler umfassend eine Schaltungsanordnung mit zwei Brückenschaltungen (10, 20) mit jeweiligen Halbleiterschaltern (11, 21) und einen zwischen den zwei Brückenschaltungen (10, 20) angeordneten Transformator (30). Eine erste der beiden Brückenschaltungen (10), welche im Betrieb einen Eingang des Gleichspannungswandlers (1) bildet, umfasst eingangsseitig eine erste zu- und abschaltbare Induktivität (16). Eine zweite der beiden Brückenschaltungen (20), welche im Betrieb einen Ausgang des Gleichspannungswandlers (1) bildet, umfasst ausgangsseitig eine zweite zu- und abschaltbare Induktivität (26).

FIG 3

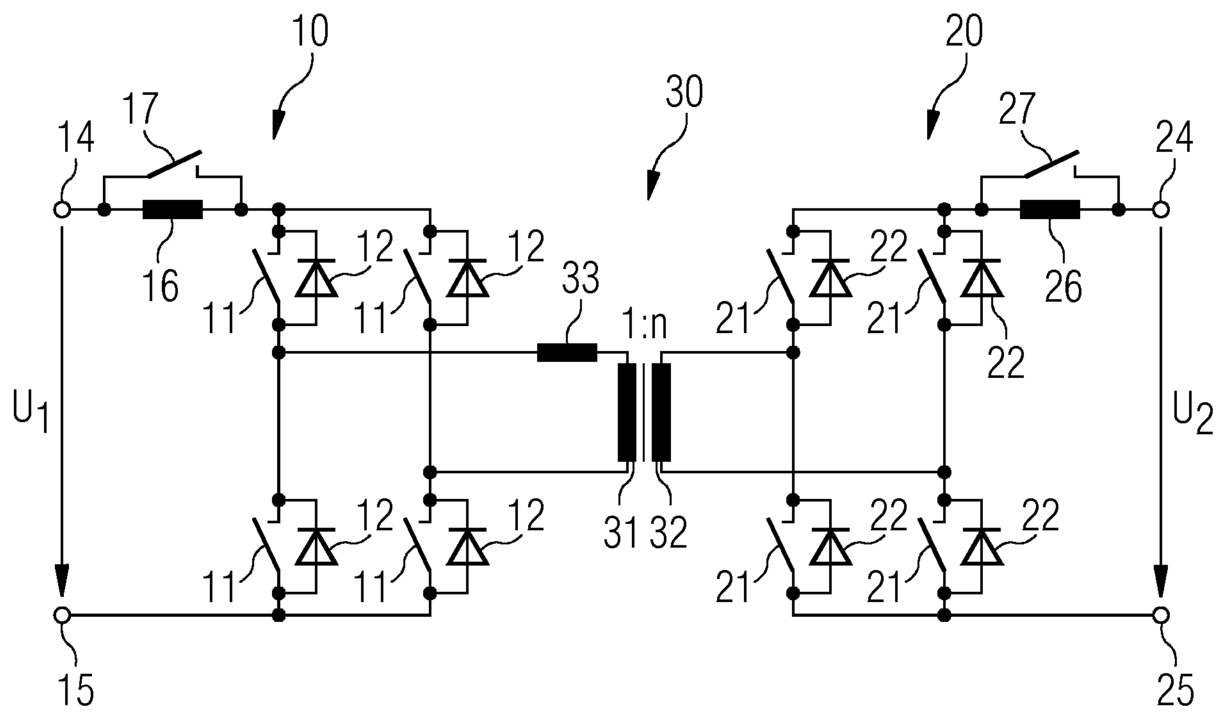


EP 3 291 433 A1

## Beschreibung

Die Erfindung betrifft einen Gleichspannungswandler mit einem Transformator.

Eine als Dual Active Bridge (DAB) bezeichnete Gleichspannungstopologie mit zwei Brückenschaltungen und einem dazwischen angeordneten Transformator ermöglicht die Anbindung sowohl von Erzeugungseinheiten, z.B. Windenergieanlagen, Photovoltaik-Anlagen, Speichersysteme, Batterieladegeräte, usw., ebenso wie die Anbindung von elektrischen Lasten, wie z.B. Antriebe an Gleichspannungsnetze. Durch eine Dual Active Bridge können Gleichspannungsnetze gleicher und auch unterschiedlicher Spannung verbunden werden. Eine galvanische Trennung wird durch den zwischen den zwei Brückenschaltungen angeordneten Transformator sichergestellt.

Dual Active Bridges weisen den Vorteil auf, kompakter und kostengünstiger als konventionelle Gleichspannungswandler zu sein.

In Fig. 1 ist eine schematische Darstellung eines Gleichspannungswandlers 1 in Form einer einphasigen Dual Active Bridge, kurz mit einphasiger DAB bezeichnet, dargestellt. Die DAB weist eine erste Brückenschaltung 10 auf, mit der eine erste Gleichspannung $U_1$ eines ersten Gleichspannungsnetzes in eine Wechselspannung transformiert wird. Die erste Gleichspannung $U_1$ liegt zwischen einem ersten Versorgungspotentialanschluss 14 und einem ersten Bezugspotentialanschluss 15 an. Die durch die erste Brückenschaltung 10 erzeugte Wechselspannung wird durch einen Transformator 30 transformiert, der ein vorgegebenes Übersetzungsverhältnis 1:n aufweist. Die mittels des Transformators 30 generierte Wechselspannung wird mittels einer nachfolgenden zweiten Brückenschaltung 20 wieder in eine Gleichspannung $U_2$ umgewandelt. Die zweite Gleichspannung $U_2$ liegt zwischen einem zweiten Versorgungspotentialanschluss 24 und einem zweiten Bezugspotentialanschluss 25 an. Dadurch kann die an der Eingangsseite der DAB anliegende Gleichspannung $U_1$ in eine andere Gleichspannung $U_2$ auf der Ausgangsseite umgewandelt werden. Auf beiden Seiten der DAB ist zwischen jeweiligem Versorgungspotentialanschluss 14 bzw. 24 und Bezugspotentialanschluss 15 bzw. 25 ein jeweiliger Glättungskondensator 13, 23 vorgesehen, durch den Spannungsschwankungen, auch als Ripple bezeichnet, geglättet werden. Diese Spannungsschwankungen und Ripple können sowohl durch Störungen in den angeschlossenen Anlagen, z.B. Kabelnetz, Freileitungsnetz, usw., erzeugt werden als auch durch die Schaltvorgänge der DAB selbst.

In Fig. 2 ist der Schaltplan einer einphasigen DAB gezeigt. Aus dem elektrischen Ersatzschaltbild ist der Aufbau der ersten und der zweiten Brückenschaltung 10, 20 ersichtlich. Bei dem gezeigten Ausführungsbeispiel sind die erste und die zweite Brückenschaltung 10, 20 auf beiden Seiten des Transformators 30 identisch aufgebaut. Jede Brückenschaltung 10 bzw. 20 weist vier Halbleiterschalter 11 bzw. 21 in Brückenschaltung auf. Jeder Halbleiterschalter 11 bzw. 21 umfasst z.B. einen IGBT oder einen MOSFET als Halbleiterschalter. Jedem der Halbleiterschalter 11 bzw. 21 ist eine Diode 12 bzw. 22 antiparallel geschaltet. Durch den Transformator 30 sind die beiden Brückenschaltungen 10, 20 und damit die beiden Seiten des Gleichspannungswandlers 1 galvanisch voneinander getrennt. Den Brückenschaltungen 10 bzw. 20 ist wieder ein Glättungskondensator 13 bzw. 23 eingangs- bzw. ausgangsseitig parallel geschaltet.

Die galvanische Trennung führt zu Vorteilen bezüglich der Auslegung der DAB, zu einer höheren Güte der transformierten Gleichspannung und verhindert die Ausbreitung von Fehlern und Störungen, die in den an die Brückenschaltungen 10, 20 angeschlossenen Anlagen auftreten.

Der Transformator 30 ist nachgebildet über einen idealen Transformator mit einer Primärwicklung 31, einer Sekundärwicklung 32 mit dem Windungsverhältnis 1:n und einer Streuinduktivität 33. Die über die DAB übertragene Leistung verhält sich entsprechend des relativen Phasenwinkels der ersten und der zweiten Brückenschaltung 10, 20 zueinander, entsprechend der Gleichung:

$$P(\phi) = \frac{U_1^2}{fL_\sigma} q\phi(1 - 2|\phi|) \qquad (1),$$

wobei

$$q = \frac{U_1}{nU_2} \qquad (2),$$

und

$$f = \frac{1}{T} \qquad (3)$$

sind.

Dabei ist $U_1$ die Eingangsspannung, $U_2$ die Ausgangsspannung und f die Schaltfrequenz in Hertz. Der Winkel Φ ist die Phasenverschiebung (Phase Shift) der Halbleiterschalter 11 bzw. 21, der relativ zwischen der ersten und der zweiten Brückenschaltung 10, 20 eingestellt werden kann. Er wird über die Position d der steigenden Flanke von $U_S$ relativ zu Beginn einer Schaltperiode beschrieben, wobei die Beziehung

$$d = \phi \cdot T \qquad (4)$$

gilt. Der Phasenverschiebungswinkel Φ ist im Betrieb der wesentliche Freiheitsgrad, mit welchem ein Leistungstransfer zwischen der ersten und der zweiten Brückenschaltung 10, 20, oder umgekehrt, variiert werden kann. Der Ausdruck q der Gleichung (2) ist eine Konstante, mit der sich der Modus der einphasigen DAB vorgeben lässt, wobei gilt:

- $q < 1$: Betrieb im Buck-Betrieb, und
- $q > 1$: Betrieb im Boost-Betrieb.

Eine sorgfältige Wahl von q ist für den Operationsbereich der Schaltbedingungen (Zero Voltage Switching (ZVS) und Zero Current Switching (ZCS)) zu berücksichtigen. Die Streuinduktivität 33 des Transformators 30 ist in dem in Fig. 2 gezeigten Ausführungsbeispiel auf die Primärseite bezogen.

Somit stellt die DAB eine geeignete Topologie für die Anwendung in zukünftigen Gleichspannungsnetzen dar. Zwischen zwei Verteilnetzen kann die DAB als Stellglied zur Regelung von Leistungsflüssen eingesetzt werden, indem die Halbleiterschalter beider Brückenschaltungen mit einem Phasenwinkel zueinander angesteuert werden. Die DAB kann somit z.B. zur Einbindung von Energiespeichersystemen und erneuerbaren Energieträgern eingesetzt werden. Die Leistung der DAB in diesen Anwendungsfeldern kann im Multi-Megawatt-Bereich liegen.

Es ist Aufgabe der Erfindung, einen Gleichspannungswandler anzugeben, welcher einen einfachen Leistungstransfer zwischen beiden Gleichspannungsnetzen ermöglicht. Gleichzeitig sollen die Spannungen der an den Gleichspannungswandler angeschlossenen Gleichspannungsnetze möglichst flexibel nach oben oder nach unten gesetzt werden können.

Diese Aufgabe wird gelöst durch einen Gleichspannungswandler gemäß den Merkmalen des Patentanspruches 1. Vorteilhafte Ausgestaltungen ergeben sich aus den abhängigen Patentansprüchen.

Die Erfindung schlägt einen Gleichspannungswandler vor, der eine Schaltungsanordnung mit zwei Brückenschaltungen mit jeweiligen Halbleiterschaltern und einen zwischen den zwei Brückenschaltungen angeordneten Transformator umfasst. Eine erste der beiden Brückenschaltungen, welche im Betrieb einen Eingang des Gleichspannungswandlers bildet, umfasst eingangsseitig eine erste zu- und abschaltbare Induktivität. Eine zweite der beiden Brückenschaltungen, welche im Betrieb einen Ausgang des Gleichspannungswandlers bildet, umfasst ausgangsseitig eine zweite zu- und abschaltbare Induktivität.

Mit einem derartigen Gleichspannungswandler ist es möglich, einen Leistungstransfer zwischen den an die Brückenschaltungen angeschlossenen Gleichspannungsnetzen zu ermöglichen. Gleichzeitig kann der Transformator kompakt aufgebaut werden. Durch das Vorsehen der ersten und der zweiten zu- und abschaltbaren Induktivität an eingangsseitigen bzw. ausgangsseitigen Brückenschaltungen lässt sich der auf der Ausgangsseite fließende Strom einstellen, wobei gleichzeitig durch einen Betrieb des Gleichspannungswandlers als Tiefsetzsteller die Spannung am ausgangsseitigen Gleichspannungsnetz herabgesetzt werden kann. Dadurch wird eine Bidirektionalität ermöglicht.

Die erste zu- und abschaltbare Induktivität umfasst gemäß einer Ausgestaltung ein der Induktivität parallel geschaltetes erstes Schaltmittel. In entsprechender Weise umfasst die zweite zu- und abschaltbare Induktivität ein der Induktivität parallel geschaltetes zweites Schaltmittel. Das erste Schaltmittel umfasst insbesondere zwei antiparallel verschaltete Halbleiterschalter. In entsprechender Weise umfasst das zweite Schaltmittel zwei antiparallel verschaltete Halbleiterschalter. Als Halbleiterschalter können beispielsweise MOSFETs oder IGBTs verwendet werden.

Der Gleichspannungswandler zeichnet sich ferner dadurch aus, dass die erste Brückenschaltung über die erste zu- und abschaltbare Induktivität mit einem ersten Versorgungspotentialanschluss eines ersten Gleichspannungsnetzes verschaltet ist. Die zweite Brückenschaltung kann über die zweite zu- und abschaltbare Induktivität mit einem zweiten Versorgungspotentialanschluss eines zweiten Gleichspannungsnetzes verschaltet sein.

In einem ersten Betriebsmodus, in dem ein Leistungstransfer von der ersten Brückenschaltung an die zweite Brückenschaltung als Tiefsetzsteller erfolgt, ist das erste Schaltmittel der ersten zu- und abschaltbaren Induktivität geschlossen und das zweite Schaltmittel der zweiten zu- und abschaltbaren Induktivität geöffnet.

In einem zweiten Betriebsmodus, in dem ein Leistungstransfer von der zweiten Brückenschaltung an die erste Brückenschaltung als Tiefsetzsteller erfolgt, ist das zweite Schaltmittel der zweiten zu- und abschaltbaren Induktivität geschlossen und das erste Schaltmittel der ersten zu- und abschaltbaren Induktivität geöffnet.

In einem dritten Betriebsmodus, in dem der Gleichspannungswandler als Dual Active Bridge betrieben wird, ist das erste und das zweite Schaltmittel der ersten und der zweiten zu- und abschaltbaren Induktivität geschlossen.

Der erste und der zweite Betriebsmodus ermöglichen das Tiefsetzen der Spannung von dem an die erste Brückenschaltung angeschlossenen Gleichspannungsnetz zu dem an die zweite Brückenschaltung angeschlossenen Gleichspannungsnetz und umgekehrt. Bedingt durch die geeignete Wahl der Induktivität der ersten bzw. zweiten zu- und abschaltbaren Induktivität kann eine definierte Welligkeit bei einer vorgegebenen Frequenz realisiert werden.

Die Erfindung wird nachfolgend näher anhand von Ausführungsbeispielen in der Zeichnung erläutert. Es zeigen:

Fig. 1 eine schematische Darstellung einer aus dem Stand der Technik bekannten einphasigen Dual Active Bridge;

Fig. 2 ein Schaltbild einer aus dem Stand der Technik bekannten einphasigen Dual Active Bridge;

Fig. 3 ein Schaltbild einer einphasigen Dual Active Bridge gemäß der Erfindung; und

Fig. 4 ein Schaltbild einer dreiphasigen Dual Active Bridge gemäß der Erfindung.

Fig. 3 zeigt eine schematische Darstellung eines erfindungsgemäßen Gleichspannungswandlers 1 in Form einer einphasigen Dual Active Bridge (kurz: einphasiger DAB). Der Gleichspannungswandler 1 basiert auf dem einleitend bereits beschriebenen Gleichspannungswandler der Fig. 2 und wird an dieser Stelle daher nicht mehr im Detail beschrieben. Um einen Leistungstransfer zwischen einem ersten Gleichspannungsnetz, das an den ersten Versorgungspotentialanschluss 14 und den ersten Bezugspotentialanschluss 15 der ersten Brückenschaltung 10 angeschlossen ist, und einem zweiten Gleichspannungsnetz, das an den zweiten Versorgungspotentialanschluss 24 und den zweiten Bezugspotentialanschluss 25 der zweiten Brückenschaltung 20 angeschlossen ist, zu ermöglichen, umfasst jede der beiden Brückenschaltungen 10, 20 eine zu- und abschaltbare Induktivität.

Eine erste zu- und abschaltbare Induktivität 16 der ersten Brückenschaltung 10 ist zwischen dem ersten Versorgungspotentialanschluss 14 und dem Knotenpunkt der High-Side-Halbleiterschalter 11 der ersten Brückenschaltung 10 verschaltet. Der Induktivität 16 ist ein erstes Schaltmittel 17 parallel geschaltet, welches zwei im Detail nicht dargestellte antiparallel verschaltete Halbleiterschalter, z.B. MOSFETs oder IGBTs, umfasst. Korrespondierend hierzu ist eine zweite Induktivität 26 der zweiten Brückenschaltung 20 zwischen dem zweiten Versorgungspotentialanschluss 24 und den zwei High-Side-Halbleiterschaltern 21 der zweiten Brückenschaltung 20 verschaltet. Der Induktivität 26 ist ein zweites Schaltmittel 27 parallel geschaltet, welches ebenfalls zwei antiparallel verschaltete Halbleiterschalter umfasst. Das erste und das zweite Schaltmittel 17, 27 sind, ebenso wie die Halbleiterleiter 11, 21, mittels einer in Fig. 3 nicht näher dargestellten Steuerung ein- und ausschaltbar, d.h. in einen elektrisch leitfähigen Zustand und in einen elektrisch nicht leitenden Zustand versetzbar.

Je nachdem, welche der Brückenschaltungen 10, 20 einen Leistungstransfer als Tiefsetzsteller an die andere Brückenschaltung 20, 10 vornehmen soll, werden die zu- und abschaltbare Induktivitäten 16, 26 entsprechend geschaltet. Die Funktionsweise des Gleichspannungswandlers ist somit von den Schalterstellungen des ersten und des zweiten Schaltmittels 17, 27 abhängig.

In einem ersten Betriebsmodus, in dem ein Leistungstransfer von der ersten Brückenschaltung 10 an die zweite Brückenschaltung 20 als Tiefsetzsteller erfolgen soll (d.h. $U_2 < U_1$), ist das erste Schaltmittel 17 der ersten zu- und abschaltbaren Induktivität 16 geschlossen und das zweite Schaltmittel 27 der zweiten zu- und abschaltbaren Induktivität 26 geöffnet. In dem ersten Betriebsmodus erfolgt dabei lediglich eine getaktete Ansteuerung der eingangsseitigen Halbleiterschalter, d.h. der Halbleiterschalter 11 der ersten Brückenschaltung 10. Demgegenüber sind die Halbleiterschalter 21 der zweiten Brückenschaltung 20 dauerhaft geöffnet (nicht leitend) geschaltet, so dass über die Dioden 22 der zweiten Brückenschaltung 20 eine Gleichrichtung der an der Sekundärseite des Transformators 30 anliegenden Wechselspannung erfolgt. Bedingt durch die Größe der Induktivität 26 kann eine definierte Welligkeit bei einer vorgegebenen Schaltfrequenz der Halbleiterschalter 11 realisiert werden. Durch die Taktung der ersten Halbleiterschalter 11 kann das Spannungsverhältnis zwischen dem ersten Gleichspannungsnetz und dem zweiten Gleichspannungsnetz eingestellt werden.

Soll demgegenüber in einem zweiten Betriebsmodus Leistung von der zweiten Brückenschaltung 20 (welche dann den Eingang des Gleichspannungswandlers darstellt) an die erste Brückenschaltung 10 als Tiefsetzsteller erfolgen (d.h. $U_1 < U_2$), so ist das zweite Schaltmittel 27 der zweiten zu- und abschaltbaren Induktivität 26 geschlossen und das erste Schaltmittel 17 der ersten zu- und abschaltbaren Induktivität 16 geöffnet. Gleichzeitig erfolgt eine getaktete Ansteuerung der Halbleiterschalter 21 der zweiten Brückenschaltung 20, während die Halbleiterschalter 11 der ersten Brückenschaltung 10 dauerhaft geöffnet (nicht leitend) sind. Eine Gleichrichtung der an der Wicklung 31 erzeugten Wechselspannung erfolgt daher mit Hilfe der Dioden 12 der ersten Brückenschaltung 10. Auch hier kann durch die geeignete Wahl der Induktivität 10 eine definierte Welligkeit bei einer vorgegebenen Schaltfrequenz der Halbleiterschalter 21 realisiert werden. Durch die Taktung der ersten Halbleiterschalter 11 kann das Spannungsverhältnis zwischen dem ersten Gleichspannungsnetz und dem zweiten Gleichspannungsnetz eingestellt werden.

Darüber hinaus kann der Gleichspannungswandler der Fig. 3 in einem dritten Betriebsmodus als Dual Active Bridge betrieben werden, wobei eine Spannungswandlung entsprechend dem Windungsverhältnis 1:n des Transformators 30 vorliegt. Dazu sind das erste und das zweite Schaltmittel 17, 27 der ersten und der zweiten zu- und abschaltbaren Induktivität 16, 26 geschlossen. Die übertragene Leistung verhält sich dann entsprechend des relativen Phasenwinkels der ersten und der zweiten Brückenschaltung 10, 20 zueinander, entsprechend der eingangs beschriebenen Gleichungen (1) bis (4).

Es ist zweckmäßig, wenn vor dem Schalten des ersten und des zweiten Schaltmittels 17, 27 die zu- und abschaltbaren Induktivitäten 16, 26 entladen werden, falls ein zusätzliches Entlastungsnetzwerk nicht eingesetzt wird.

Fig. 4 zeigt ein zweites Ausführungsbeispiel, in dem ein Schaltbild einer dreiphasigen DAB dargestellt ist. In dieser Ausgestaltung umfasst der Transformator 30 in jeder der Phasen eine Streuinduktivität 33. Durch die Ausnutzung von drei Phasen kann die übertragbare Gesamtleistung zwischen den beiden Gleichspannungs-Netzen um ungefähr 70 % erhöht werden. Darüber hinaus ist zusätzlich pro Brückenschaltung eine weitere Halbbrücke, umfassend zwei in Serie miteinander verschaltete Halbleiterschalter 11 und jeweils parallel geschaltete Dioden 10, vorzusehen.

Der vorgeschlagene Gleichspannungswandler beruht auf der Topologie einer DAB, die Leistung zwischen den an die Brückenschaltungen angeschlossenen Gleichspannungsnetzen transferieren kann. Dabei kann er durch das Vorsehen zu- und abschaltbarer Induktivitäten die Spannungen im jeweiligen Gleichspannungsnetz nach oben oder auch nach unten setzen. Durch das zusätzliche Vorsehen der zu- und abschaltbaren Induktivitäten am jeweiligen Eingang der Brückenschaltungen wird ein Leistungstransfer als Tiefsetzsteller ermöglicht, wobei durch die Wahl der Induktivität eine definierte Welligkeit bei einer vorgegebenen Frequenz realisiert werden kann. Der Transformator kann dadurch kompakt aufgebaut werden.

Bezugszeichenliste

| | |
|---|---|
| 1 | Gleichspannungswandler |
| 10 | erste Brückenschaltung |
| 11 | Halbleiterschalter |
| 12 | Diode |
| 13 | Glättungskondensator |
| 14 | erster Versorgungspotentialanschluss |
| 15 | erster Bezugspotentialanschluss |
| 16 | zu- und abschaltbare Induktivität |
| 17 | erstes Schaltmittel |
| $U_1$ | Spannung erstes DC-Netz |
| 20 | zweite Brückenschaltung |
| 21 | Halbleiterschalter |
| 22 | Diode |
| 23 | Glättungskondensator |
| 24 | zweiter Versorgungspotentialanschluss |
| 25 | zweiter Bezugspotentialanschluss |
| 26 | zu- und abschaltbare Induktivität |
| 27 | zweites Schaltmittel |
| $U_2$ | Spannung zweites DC-Netz |
| 30 | Transformator |
| 31 | Primärwicklung |
| 32 | Sekundärwicklung |
| 33 | Streuinduktivität |

## Patentansprüche

1. Gleichspannungswandler umfassend eine Schaltungsanordnung mit zwei Brückenschaltungen (10, 20) mit jeweiligen Halbleiterschaltern (11, 21) und einen zwischen den zwei Brückenschaltungen (10, 20) angeordneten Transformator (30), **dadurch gekennzeichnet, dass**
eine erste der beiden Brückenschaltungen (10), welche im Betrieb einen Eingang des Gleichspannungswandlers (1) bildet, eingangsseitig eine erste zu- und abschaltbare Induktivität (16) umfasst, und
eine zweite der beiden Brückenschaltungen (20), welche im Betrieb einen Ausgang des Gleichspannungswandlers (1) bildet, ausgangsseitig eine zweite zu- und abschaltbare Induktivität (26) umfasst.

2. Gleichspannungswandler nach Anspruch 1, **dadurch gekennzeichnet, dass**

   - die erste zu- und abschaltbare Induktivität (16) ein der Induktivität parallel geschaltetes erstes Schaltmittel (17) umfasst, und
   - die zweite zu- und abschaltbare Induktivität (26) ein der Induktivität parallel geschaltetes zweites Schaltmittel (27) umfasst.

3. Gleichspannungswandler nach Anspruch 2, **dadurch gekennzeichnet, dass**

   - das erste Schaltmittel (17) zwei antiparallel verschaltete Halbleiterschalter umfasst und
   - das zweite Schaltmittel (27) zwei antiparallel verschaltete Halbleiterschalter umfasst.

4. Gleichspannungswandler nach einem der vorhergehenden Ansprüche, **dadurch gekennzeichnet, dass**

   - die erste Brückenschaltung (10) über die erste zu- und abschaltbare Induktivität (16) mit einem ersten Versorgungspotentialanschluss (14) eines ersten Gleichspannungsnetzes verschaltet ist, und
   - die zweite Brückenschaltung (20) über die zweite zu- und abschaltbare Induktivität (26) mit einem zweiten Versorgungspotentialanschluss (24) eines zweiten Gleichspannungsnetzes verschaltet ist.

5. Gleichspannungswandler nach einem der Ansprüche 1 bis 4, **dadurch gekennzeichnet, dass** in einem ersten Betriebsmodus, in dem ein Leistungstransfer von der ersten Brückenschaltung (10) an die zweite Brückenschaltung (20) als Tiefsetzsteller erfolgt, das erste Schaltmittel (17) der ersten zu- und abschaltbaren Induktivität (16) geschlossen und das zweite Schaltmittel (27) der zweiten zu- und abschaltbaren Induktivität (26) geöffnet ist.

6. Gleichspannungswandler nach einem der Ansprüche 1 bis 4, **dadurch gekennzeichnet, dass** in einem zweiten Betriebsmodus, in dem ein Leistungstransfer von der zweiten Brückenschaltung (20) an die erste Brückenschaltung (10) als Tiefsetzsteller erfolgt, das zweite Schaltmittel (27) der zweiten zu- und abschaltbaren Induktivität (26) geschlossen und das erste Schaltmittel (17) der ersten zu- und abschaltbaren Induktivität (16) geöffnet ist.

**7.** Gleichspannungswandler nach einem der Ansprüche 1 bis 4, **dadurch gekennzeichnet, dass** in einem dritten Betriebsmodus, in dem der Gleichspannungswandler (1) als Dual Active Bridge betrieben wird, das erste und zweite Schaltmittel (17, 27) der ersten und der zweiten zu- und abschaltbaren Induktivität (16, 26) geschlossen ist.

FIG 1

Stand der Technik

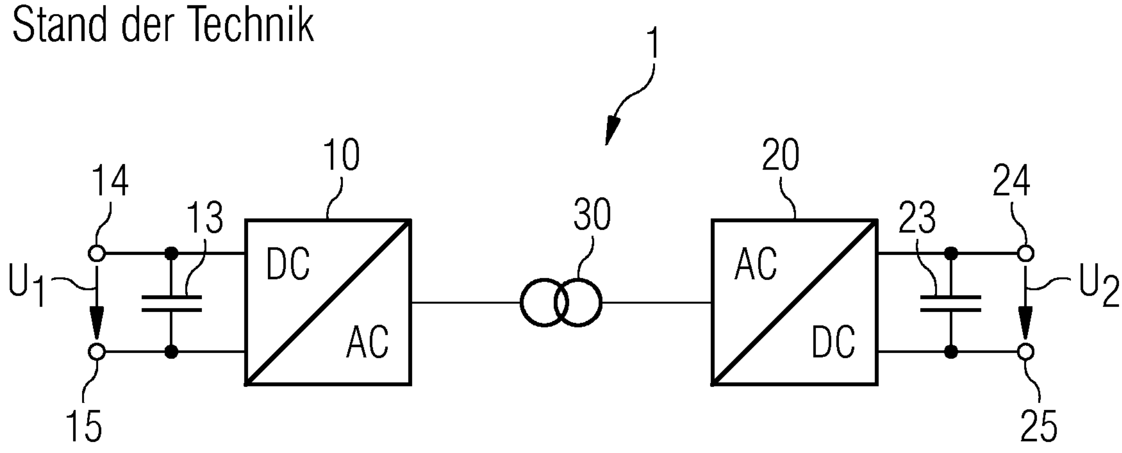


FIG 2

Stand der Technik

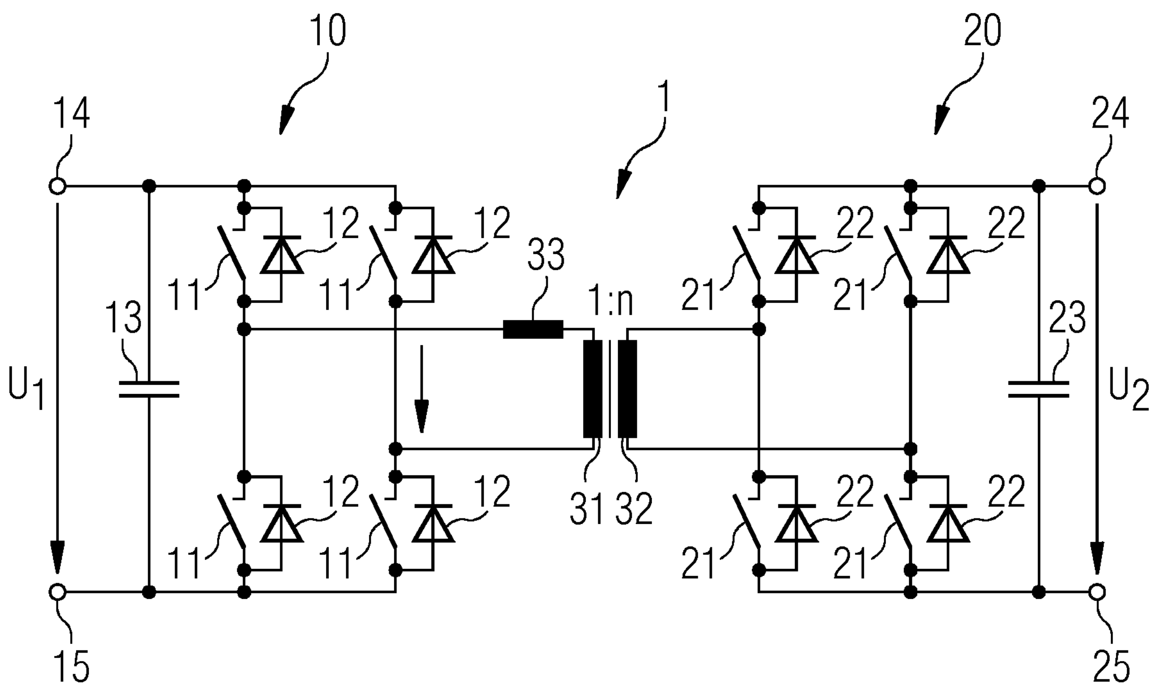

FIG 3

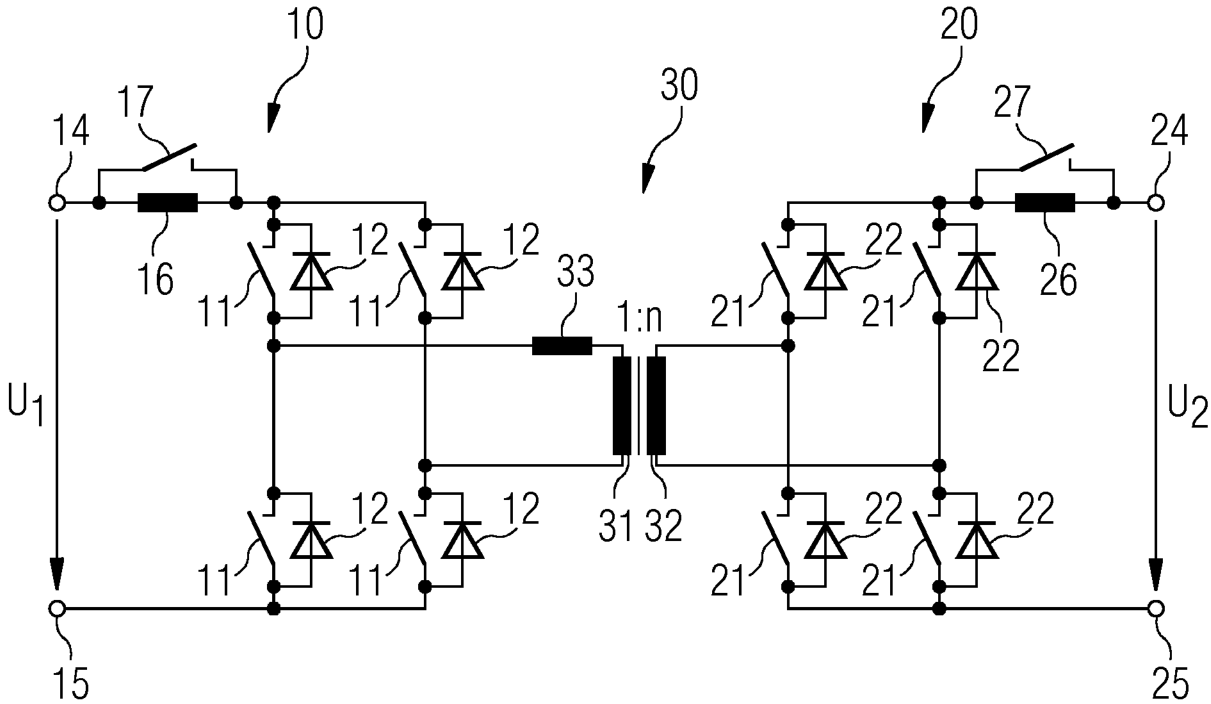

FIG 4

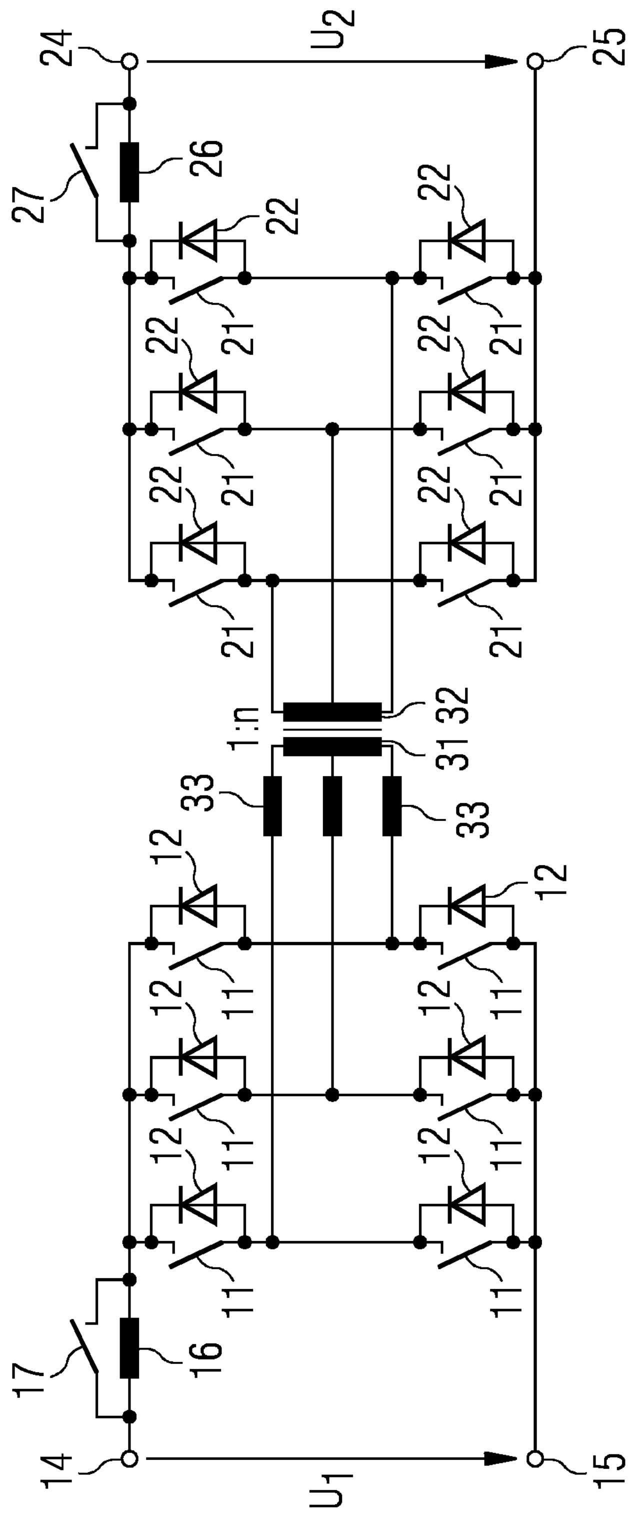

Europäisches Patentamt
European Patent Office
Office européen des brevets

# EUROPÄISCHER RECHERCHENBERICHT

Nummer der Anmeldung
EP 16 18 7429

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br><br>Y | DE 10 2014 014639 A1 (ASD AUTOMATIC STORAGE DEVICE GMBH [DE])<br>7. April 2016 (2016-04-07)<br>* Zusammenfassung; Abbildung 1 *<br>----- | 1<br><br><br>2-7 | INV.<br>H02M3/335 |
| X<br><br>Y | US 4 953 068 A (HENZE CHRISTOPHER P [US])<br>28. August 1990 (1990-08-28)<br>* Spalte 5; Abbildungen 1,4 *<br>----- | 1<br><br>2-7 | |
| Y | US 2013/320953 A1 (CASSEL RICHARD L [US] ET AL) 5. Dezember 2013 (2013-12-05)<br>* Absatz [0051]; Abbildung 2 *<br>----- | 2-7 | |
| | | | RECHERCHIERTE SACHGEBIETE (IPC) |
| | | | H02M |

Der vorliegende Recherchenbericht wurde für alle Patentansprüche erstellt

1

| Recherchenort | Abschlußdatum der Recherche | Prüfer |
|---|---|---|
| Den Haag | 17. Februar 2017 | Speiser, Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 16 18 7429

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2017

| Im Recherchenbericht angeführtes Patentdokument | Datum der Veröffentlichung | Mitglied(er) der Patentfamilie | Datum der Veröffentlichung |
|---|---|---|---|
| DE 102014014639 A1 | 07-04-2016 | KEINE | |
| US 4953068 A | 28-08-1990 | KEINE | |
| US 2013320953 A1 | 05-12-2013 | EP 2856646 A1 | 08-04-2015 |
| | | US 2013320953 A1 | 05-12-2013 |
| | | WO 2013184596 A1 | 12-12-2013 |

EPO FORM P0461

Für nähere Einzelheiten zu diesem Anhang : siehe Amtsblatt des Europäischen Patentamts, Nr.12/82